# EUROPEAN PATENT SPECIFICATION

(11) **EP 3 587 146 B1**
(45) Date of publication and mention of the grant of the patent: **28.04.2021**
(21) Application number: 19179928.7
(22) Date of filing: 13.06.2019
(51) Int. Cl.: B60C 19/00

(54) **PNEUMATIC TIRE**
LUFTREIFEN
PNEUMATIQUE

(30) Priority: 29.06.2018 JP 2018125002
(43) Date of publication of application: 01.01.2020
(73) Proprietor: Toyo Tire Corporation, Itami-shi, Hyogo 664-0847 (JP)
(72) Inventor: MIZUTANI, Hiroto, Hyogo, 664-0847 (JP)
(74) Representative: Eisenführ Speiser

(56) References cited:
- WO-A1-2017/076531
- WO-A1-2019/129584

## Description

### BACKGROUND OF THE INVENTION

### Technical Field

The present invention relates to pneumatic tires.

### Related art

As one of noises caused by pneumatic tires, a cavity resonance (also referred to as a tire cavity resonance) is known. The cavity resonance is produced by resonance of air in a tire inner cavity when the air is vibrated by vibration of a tread portion caused by unevenness of a road surface and propagates in the tire inner cavity. JP-A-2017-109701 and WO-A-2017/076531 both disclose pneumatic tires in which a sound suppressor is attached to an inner peripheral surface of a tread portion in order to reduce the cavity resonance.

In this pneumatic tires, the sound suppressor includes a porous part disposed in the tire inner cavity and a thin film part laminated on a surface of the porous part. The cavity resonance is absorbed by film vibration of the thin film part, and the vibration of the thin film part is absorbed by the porous part supporting the thin film part. Note that JP-A-2017-109701 discloses a case of disposing the sound suppressor with its longitudinal direction along a tire radial direction such that its thickness direction points in a tire circumferential direction, and a case of disposing the sound suppressor with its longitudinal direction along the tire circumferential direction such that its thickness direction points in the tire radial direction.

### SUMMARY

When the sound suppressor is disposed along the tire radial direction, the sound suppressor protrudes greatly from the tire inner peripheral surface. Therefore, when the pneumatic tire is assembled to a rim, the sound suppressor is likely to interfere with the rim, deteriorating ease of assembling to the rim. Meanwhile, when the sound suppressor is disposed along the tire circumferential direction, a reduction effect of the cavity resonance is smaller than when the sound suppressor is disposed along the tire radial direction.

An object of the present invention is, in a pneumatic tire with the sound suppressor attached to the tire inner peripheral surface of the tread portion, to improve the reduction effect of the cavity resonance while inhibiting the deterioration of ease of assembling to the rim.

The present invention provides a pneumatic tire including: a tread portion; and a sound suppressor extending in a tire circumferential direction over an entire circumference of a tire inner peripheral surface of the tread portion,
wherein the sound suppressor includes:
a porous part attached to the tire inner peripheral surface of the tread portion; and
a thin film part laminated inside in a tire radial direction of the porous part and facing a tire inner cavity, and
the thin film part is a non-porous material, and formed with a plurality of through holes.

According to the present invention, the cavity resonance propagating in the tire inner cavity excites film vibration of the thin film part facing the tire inner cavity. The film vibration of the thin film part is converted into heat energy and absorbed by being buffered by the porous part, and as a result, the cavity resonance is reduced. Also, since the sound suppressor extends in the tire circumferential direction, an amount of protrusion in the tire radial direction can be reduced, and deterioration of ease of assembling to the rim is inhibited.

Moreover, since the plurality of through holes is formed in the thin film part, part of the cavity resonance is transmitted to the porous part through the through holes. At this time, when passing through the through holes in the first place, the cavity resonance is reduced by friction with hole wall surfaces and also by a turbulent flow generated after passing through the through holes. Furthermore, the cavity resonance is transmitted to the porous part via the through holes and is absorbed.

Therefore, in the pneumatic tire in which the sound suppressor is attached to the tire inner peripheral surface of the tread portion, it is possible to effectively reduce the cavity resonance by sound absorption by film vibration of the thin film part, reduction by the friction and the turbulent flow when passing through the through holes, and sound absorption by the porous part while inhibiting the deterioration of ease of assembling to the rim.

Preferably, the thin film part is formed of a thermoplastic polymer, a thermoplastic resin, a thermoplastic elastomer, or a rubber.

According to this configuration, it is possible to effectively perform film sound absorption by the thin film part.

Preferably, in the sound suppressor, a natural frequency of the thin film part is between 200 Hz and 250 Hz inclusive in a state where the thin film part being laminated on the porous part.

The cavity resonance has a frequency peak between 200 Hz and 250 Hz inclusive that is likely to cause a problem in general as a road noise. Therefore, according to this configuration, since a sound having the frequency peak between 200 Hz and 250 Hz inclusive is suitably reduced by the thin film part, the cavity resonance is reduced effectively.

Preferably, a thickness of the thin film part is between 0.1 mm and 2.0 mm inclusive.

According to this configuration, it is easy to generate the natural frequency of the thin film part in the sound suppressor between 200 Hz and 250 Hz inclusive. If the thickness of the thin film part is less than 0.1 mm, the natural frequency is likely to be higher than 250 Hz. If the thickness of the thin film part is greater than 2.0 mm, the natural frequency is likely to be lower than 200 Hz. In these two cases, it is difficult for the thin film part to effectively act on the cavity resonance having the frequency peak between 200 Hz and 250 Hz inclusive.

Preferably, a thickness of the thin film part is between 2% and 10% inclusive of a thickness of the porous part.

According to this configuration, an increase in weight of the sound suppressor is inhibited.

Preferably, a hole diameter of each of the through holes is between 1 mm and 10 mm inclusive.

According to this configuration, it is easy to obtain the sound reduction effect by the through holes while maintaining the film strength of the thin film part. If the hole diameter of the through hole is less than 1 mm, an opening area of the through hole is small, and it is difficult to obtain the sufficient sound reduction effect. If the hole diameter of the through hole is greater than 10 mm, the film strength of the thin film part is likely to be excessively reduced.

Preferably, an interval between the plurality of through holes is between 5 mm and 50 mm inclusive.

According to this configuration, it is easy to obtain the sound reduction effect by the through holes while maintaining the film strength. If the interval of the through holes is less than 5 mm, the film strength of the thin film part is likely to be excessively reduced. If the interval of the through holes is greater than 50 mm, the number of through holes decreases, and it is difficult to obtain the sufficient sound reduction effect.

Preferably, the porous part includes a plurality of protrusions protruding inside in the tire radial direction and extending in a tire width direction, the protrusions being formed at intervals in the tire circumferential direction.

According to this configuration, the cavity resonance propagating in the tire inner cavity is easily received and absorbed by the protrusions. As a result, the sound absorption effect in the porous member can be easily promoted, and the reduction effect of the cavity resonance by the sound suppressor can be further increased.

According to the present invention, in the pneumatic tire in which the sound suppressor is attached to the tire inner peripheral surface of the tread portion, it is possible to enhance the reduction effect of the cavity resonance while inhibiting the deterioration of ease of assembling to the rim.

### BRIEF DESCRIPTION OF THE DRAWINGS

The foregoing and the other features of the present invention will become apparent from the following description and drawings of an illustrative embodiment of the invention in which:
FIG. 1 is a meridional cross-sectional view of a rim assembly according to an embodiment of the present invention;
FIG. 2 is a cross-sectional view in a tire equatorial plane of the rim assembly of FIG. 1;
FIG. 3 is a perspective view of a sound suppressor;
FIG. 4 is a cross-sectional view showing a tire inner cavity of the rim assembly when brought into contact with the ground;
FIG. 5 is a perspective view showing a sound suppressor according to a modification;
FIG. 6 is a cross-sectional view showing a sound suppressor according to another modification;
FIG. 7 is a cross-sectional view showing a sound suppressor according to still another modification; and
FIG. 8 is a cross-sectional view along the line VIII-VIII of FIG. 7.

### DETAILED DESCRIPTION OF EMBODIMENTS

An embodiment according to the present invention will be described below with reference to the accompanying drawings. Note that the following description is essentially illustrative only and is not intended to limit the present invention, its application, or its use. The drawings are schematic, and a ratio of each size is different from an actual ratio.

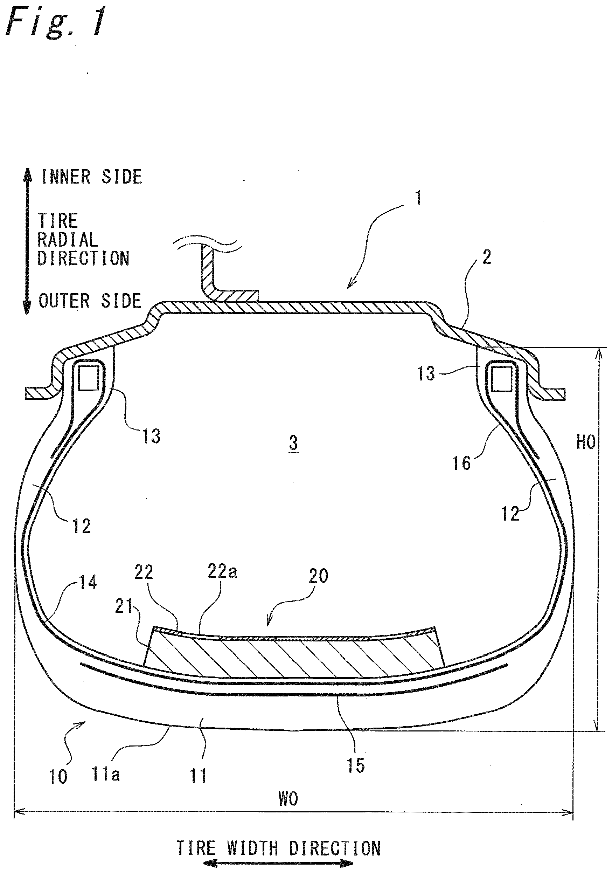

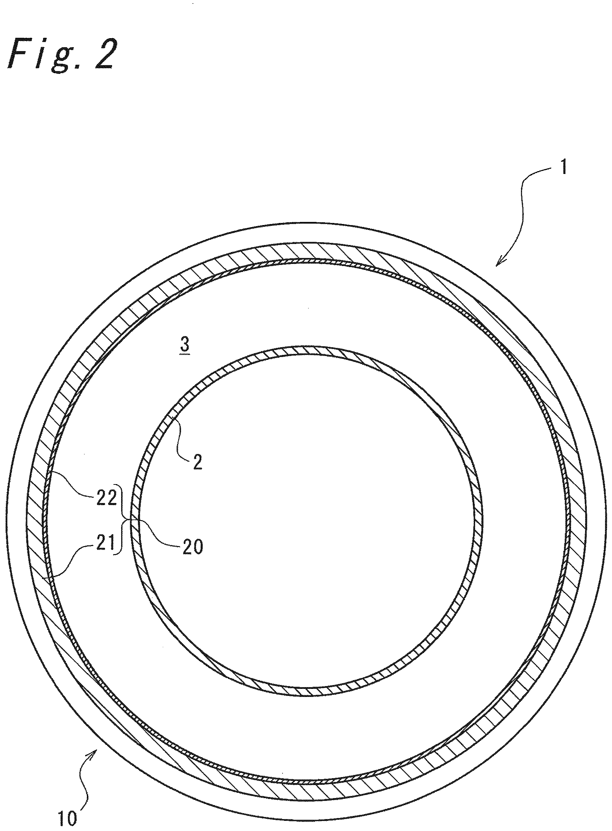

FIG. 1 is a meridional cross-sectional view of a tire rim assembly 1 according to an embodiment of the present invention. FIG. 2 is a cross-sectional view in a tire equatorial plane of the tire rim assembly 1. As shown in FIGS. 1 and 2, the tire rim assembly 1 is an assembly in which a pneumatic tire 10 is assembled on an outer periphery of a rim 2. A tire inner cavity 3 is defined between an outer periphery of the rim 2 and an inner surface of the pneumatic tire 10.

The pneumatic tire 10 includes a tread portion 11 in which a tread surface 11a is formed on an outer surface as a ground contact surface, a pair of sidewall portions 12 extending inward in a tire radial direction from both ends in a tire width direction of the tread portion 11, and a pair of bead portions 13 positioned at inner ends in a tire radial direction of the one pair of sidewall portions 12.

A carcass ply 14 is laid over a tire inner surface side of the tread portion 11 and the sidewall portions 12 between the one pair of bead portions 13. A belt layer 15 is wound in a tire circumferential direction between the tread portion 11 and the carcass ply 14. An inner liner 16 is disposed on a tire inner surface side of the carcass ply 14. The inner liner 16 is formed of a material that is hardly permeable to air.

In the pneumatic tire 10, a sound suppressor 20 is attached to an inner liner 16 that constitutes a tire inner surface. The sound suppressor 20 includes a porous part 21 attached to a tire inner peripheral surface of a tread portion 11 and a thin film part 22 laminated inside in the tire radial direction. As shown in FIG. 2, the sound suppressor 20 extends annularly over the entire circumference in the tire circumferential direction.

The porous part 21 includes open cells or closed cells obtained by foaming a rubber, a synthetic resin, or other materials. The specific gravity of the porous part 21 is between 0.021 g/cm³ and 0.027 g/cm³ inclusive. As the porous part 21, for example, a polyurethane-based sponge can be employed, and various other sponge-like materials can also be employed. For attaching the porous part 21 to the inner liner 16, an appropriate joining method such as an adhesive or double-sided tape can be employed.

The thin film part 22 is a thin film formed of a thermoplastic polymer, a thermoplastic resin, a thermoplastic elastomer, or a rubber. The thin film part 22 is a non-porous material. Unlike a sponge-shaped material formed by foaming, such as a porous material, the thin film part 22 does not include open cells or closed cells. The specific gravity is between 0.8 g/cm³ and 2.0 g/cm³ inclusive.

The thin film part 22 is formed separately from the porous part 21. The thin film part 22 is attached to the entire surface of the porous part 21on an inner side in the tire radial direction by an appropriate joining method such as an adhesive or a double-sided tape.

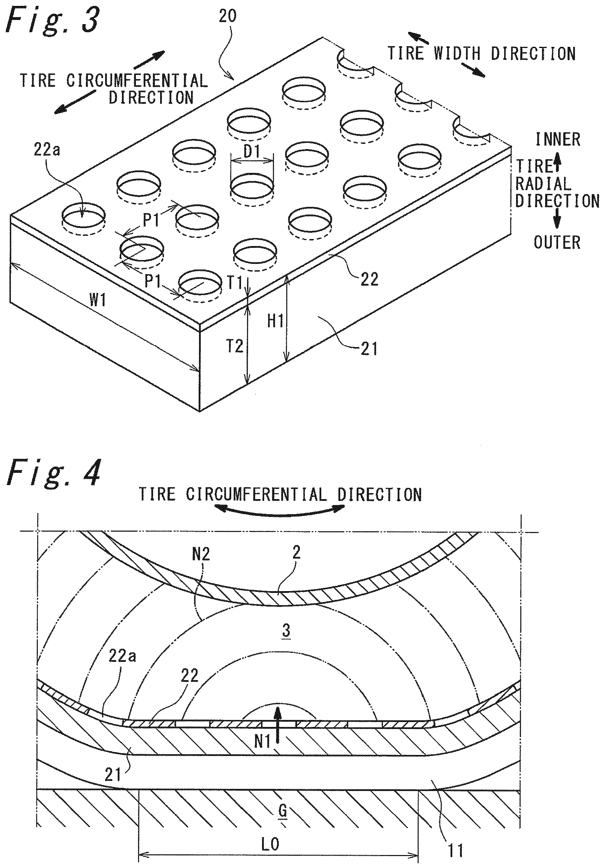

FIG. 3 is a perspective view of the sound suppressor 20, showing the sound suppressor 20 that is not annularly wound. Note that sizes of respective portions of the sound suppressor 20 are measured based on the state shown in FIG. 3. As shown in FIG. 3, the sound suppressor 20 is formed in a sheet shape, and a tire width direction length W1 is set between 30% and 70% inclusive of a tire width W0 of the pneumatic tire 10 (see FIG. 1).

The sound suppressor 20 is set such that a height H1 in the tire radial direction is between 10% and 50% inclusive of a sectional height H0 of the pneumatic tire 10 (see FIG. 1). Note that the sectional height H0 of the pneumatic tire 10 is calculated by multiplying the tire width W0 by oblateness.

In the sound suppressor 20, a thickness T1 and the specific gravity of the thin film part 22 are selected such that the natural frequency of the thin film part 22 is between 200 Hz and 250 Hz inclusive. The thin film part 22 is formed such that the thickness T1 of the thin film part 22 is, for example, between 2% and 10% inclusive of a thickness T2 of the porous part 21 and between 0.1 mm and 2.0 mm inclusive.

The thin film part 22 is formed with a plurality of through holes 22a penetrating the thin film part 22 in a thickness direction (that is, tire radial direction). The plurality of through holes 22a is formed such that a hole diameter D1 is between 1 mm and 10 mm inclusive, and that a formation pitch P1 between the through holes 22a is between 5 mm and 50 mm inclusive. Note that the formation pitch P1 means a formation pitch in the tire radial direction and in the tire width direction.

FIG. 4 is a cross-sectional view similar to FIG. 2, showing a periphery of a ground contact portion of a tire rim assembly 1 in an enlarged manner. As shown in FIG. 4, the tire rim assembly 1 is configured to be in contact with a road surface with a ground contact length L0 on the tire equatorial plane when filled with air at a prescribed air pressure.

As shown in FIG. 4, when the tire rim assembly 1 is rolling on a road surface, a vibration in the tire radial direction can occur in the tread portion 11 due to unevenness of the road surface G. At this time, the vibration of the tread portion 11 is transmitted to the air in a tire inner cavity 3 via the sound suppressor 20 and becomes a tire sound N1.

The tire sound N1 propagates radially from the ground contact portion in the tire inner cavity 3 as shown by two-dot chain lines, and resonates at this time and becomes a cavity resonance N2. In general, as the cavity resonance N2, a sound having a frequency peak in the range between 200 Hz and 250 Hz inclusive is likely to cause a problem as a road noise.

Here, the sound suppressor 20 is provided with the thin film part 22 on the side facing the tire inner cavity 3. As described above, the thickness, the specific gravity, and the like of the thin film part 22 are selected to have a resonance frequency of between 200 Hz and 250 Hz inclusive in the sound suppressor 20. Therefore, out of the cavity resonance N2 propagating in the tire inner cavity 3, a sound having a frequency peak in the range between 200 Hz and 250 Hz inclusive induces or excites the film vibration of the thin film part 22.

As a result, the cavity resonance N2 is converted into the film vibration of the thin film part 22, and becomes heat energy and is reduced. Also, the vibration of the thin film part 22 is absorbed by the porous part 21 supporting the thin film part 22. Furthermore, since the plurality of through holes 22a is formed in the thin film part 22, part of the cavity resonance N2 passes through the through holes 22a. When passing through the through holes 22a, the cavity resonance N2 is reduced by friction with hole wall surfaces and also by a turbulent flow generated after passing through the through holes 22a. Furthermore, the cavity resonance N2 is transmitted to the porous part 21 via the through holes 22a and is absorbed.

The pneumatic tire 10 described above performs the following effects.
(1) The cavity resonance N2 is effectively reduced by sound absorption by the film vibration of the thin film part 22, reduction by friction when passing through the through holes 22a and a turbulent flow, and sound absorption by the porous part 21. Also, since the sound suppressor 20 is attached to the tire inner peripheral surface of the tread portion 11 along the tire circumferential direction, a protrusion amount of the sound suppressor 20 inside in the tire radial direction in the tire inner cavity 3 is inhibited, and deterioration of ease of assembling to the rim is inhibited.
   Therefore, in the pneumatic tire in which the sound suppressor 20 is attached to the tire inner peripheral surface of the tread portion 11, it is possible to enhance the reduction effect of the cavity resonance N2 while inhibiting the deterioration of ease of assembling to the rim.
(2) The thin film part 22, which is a thin film formed of a thermoplastic polymer, a thermoplastic resin, a thermoplastic elastomer, or a rubber, can effectively perform film sound absorption.
(3) In the sound suppressor 20, for example, the thickness and the specific gravity of the thin film part 22 are selected such that the natural frequency of the thin film part 22 is between 200 Hz and 250 Hz inclusive in a state where the thin film part 22 being laminated on the porous part 21. Accordingly, out of the cavity resonance N2, a sound of between 200 Hz and 250 Hz inclusive, which is likely to cause a problem as a road noise within a vehicle in general, is effectively absorbed by resonance of the thin film part 22 and is reduced.
(4) Since the thickness T1 of the thin film part 22 is set between 0.1 mm and 2.0 mm inclusive, the natural frequency of the thin film part 22 in the sound suppressor 20 is likely to be between 200 Hz and 250 Hz inclusive. If the thickness of the thin film part 22 is less than 0.1 mm, the natural frequency is likely to be higher than 250 Hz. If the thickness of the thin film part 22 is greater than 2.0 mm, the natural frequency is likely to be lower than 200 Hz. In these two cases, it is difficult for the thin film part 22 to effectively act on the cavity resonance N2 having a frequency peak between 200 Hz and 250 Hz inclusive.
(5) Since the thickness T1 of the thin film part 22 is between 2% and 10% inclusive of the thickness T2 of the porous part, a weight increase in the sound suppressor 20 is inhibited.
(6) Since the hole diameter D1 of each through hole 22a formed in the thin film part 22 is between 1 mm and 10 mm inclusive, it is easy to obtain the sound reduction effect by the through holes 22a while maintaining the film strength of the thin film part 22. If the hole diameter D1 of the through hole 22a is less than 1 mm, an opening area of the through hole 22a is small, and it is difficult to obtain the sufficient sound reduction effect. If the hole diameter D1 of the through hole 22a is greater than 10 mm, the film strength of the thin film part 22 is likely to be excessively reduced.
(7) Since the formation pitch P1 of the plurality of through holes 22a formed in the thin film part 22 is between 5 mm and 50 mm inclusive, it is easy to obtain the sound reduction effect by the through holes 22a while maintaining the film strength of the thin film part 22. If the formation pitch P1 of the through holes 22a is less than 5 mm, the film strength of the thin film part 22 is likely to be excessively reduced. If the formation pitch P1 of the through holes 22a is greater than 50 mm, the number of through holes 22a decreases, and it is difficult to obtain the sufficient sound reduction effect.
(8) The height H1 of the tire radial direction of the sound suppressor 20 is set between 10% and 50% inclusive of the sectional height H0 of the pneumatic tire 10. Therefore, it is easy to obtain the reduction effect of the cavity resonance N2 while inhibiting deterioration of ease of assembling to the rim. That is, if the height H1 of the sound suppressor 20 is less than 10% of the tire sectional height H0, it is difficult to effectively obtain the reduction effect of the cavity resonance N2. Meanwhile, when the height H1 of the sound suppressor 20 is greater than 50% of the tire sectional height H0, the sound suppressor 20 easily interferes with a rim 2 during assembling to the rim, deteriorating ease of assembling to the rim.
(9) In the sound suppressor 20, the width W1 in the tire width direction is 50% or more of the tire width W0 of the pneumatic tire 10 and 150 mm or less. Therefore, it is easy to obtain the reduction effect of the cavity resonance N2 by the sound suppressor 20 while maintaining ease of attaching the sound suppressor 20 along the inner peripheral surface of the tread portion 11. That is, if the width W1 of the sound suppressor 20 is less than 50% of the tire width W0, it is difficult to sufficiently obtain the reduction effect of the cavity resonance N2. Meanwhile, if the width W1 of the sound suppressor 20 is greater than 150mm, the sound suppressor 20 easily interferes with sidewall portions 12 and is bent, ease of attachment deteriorates, and ease of adhesion to the inner liner 16 easily deteriorates.

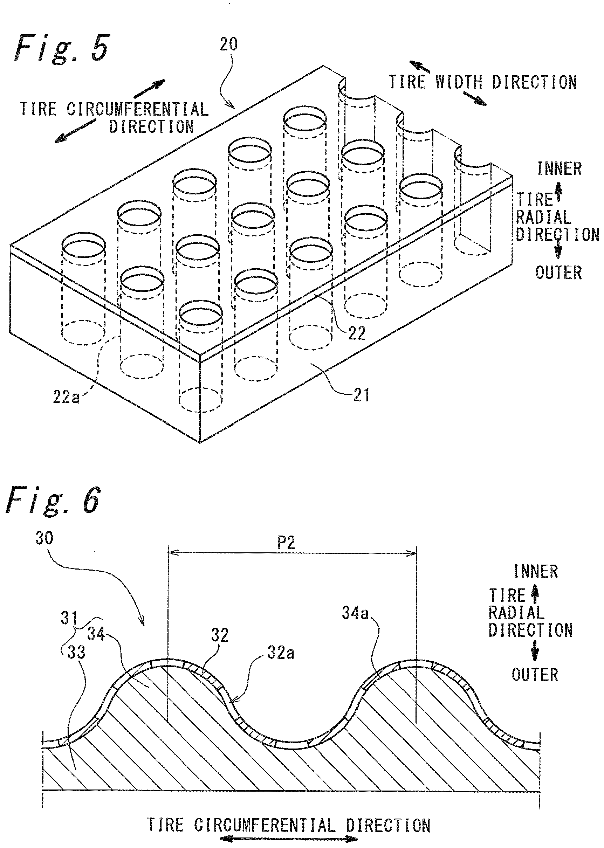

According to the above embodiment, the sound suppressor 20 has been formed by separately forming the porous part 21 and the thin film part 22, and then joining them. However, the present invention is not limited to this method. That is, the thin film part 22 may be integrally formed on the surface of the porous part 21 by depositing (or coating) the thin film part 22 on the entire surface inside in the tire radial direction of the porous part 21 by, for example, spraying or coating, and then drying. In this case, as shown in FIG. 5, the through holes 22a may be formed not only in the thin film part 22 but also throughout the thin film part 22 and the porous part 21, or may be formed until the middle of the porous part 21.

FIG. 6 is a cross-sectional view along the tire circumferential direction showing a sound suppressor 30 according to a modification. As shown in FIG. 6, the sound suppressor 30 may be formed to have an uneven shape on a side facing the tire inner cavity 3. Specifically, a porous part 31 may include a sheet-shaped base portion 33 positioned on an inner liner 16 side, and a plurality of protrusions 34 protruding in an arc shape in side view from the base portion 33 to a rim 2 side.

The plurality of protrusions 34 extends along the tire width direction of the sound suppressor 30 and is formed at intervals in the tire circumferential direction. A formation pitch P2 between one pair of the protrusions 34 adjacent to each other in the tire circumferential direction is set shorter than the ground contact length L0 of the pneumatic tire 10.

The thin film part 32 is attached onto the entire surface of the uneven porous part 31 on the tire inner cavity 3 side by an appropriate joining method.

With the sound suppressor 30 according to the present modification, in addition to the effects according to the above embodiment, the cavity resonance N2 that propagates in the tire inner cavity 3 is likely to be received by the protrusions 34. As a result, it is easy to cause film sound absorption by the thin film part 32 in the protrusions 34. Also, it is easy to reduce the cavity resonance N2 by through holes 32a and easy to transmit the cavity resonance to the porous part 31 via the through holes 32a in the protrusions 34. Also, it is possible to further increase the reduction effect of the cavity resonance N2 by the sound suppressor 30.

The formation pitch P2 between one pair of the protrusions 34 adjacent to each other in the tire circumferential direction is shorter than the ground contact length L0 in the tire equatorial plane of the pneumatic tire 10. Therefore, at least one protrusion 34 exists in the ground contact shape of the pneumatic tire 10. Accordingly, the vibration-related noise that is input from the tread portion 11 when brought into contact with the ground is absorbed by the protrusions 34 when the noise is transmitted to the tire inner cavity 3. That is, since the vibration input from the tread portion 11, which can cause the cavity resonance N2, is reduced effectively on an input source side, the cavity resonance N2 is reduced.

In the above embodiment, the protrusion 34 is formed such that a top 34a has an arc shape as viewed from the tire width direction. Meanwhile, the protrusion 34 may be formed such that the top 34a has a rectangular shape, or an angular R portion may be formed in a rectangularly formed angled part. By forming the top 34a of the protrusion 34 in an arc shape or forming the angular R portion in the angled part obtained by a rectangular shape, the cavity resonance N2 is easily received normally at the top 34a, and the cavity resonance N2 is effectively reduced.

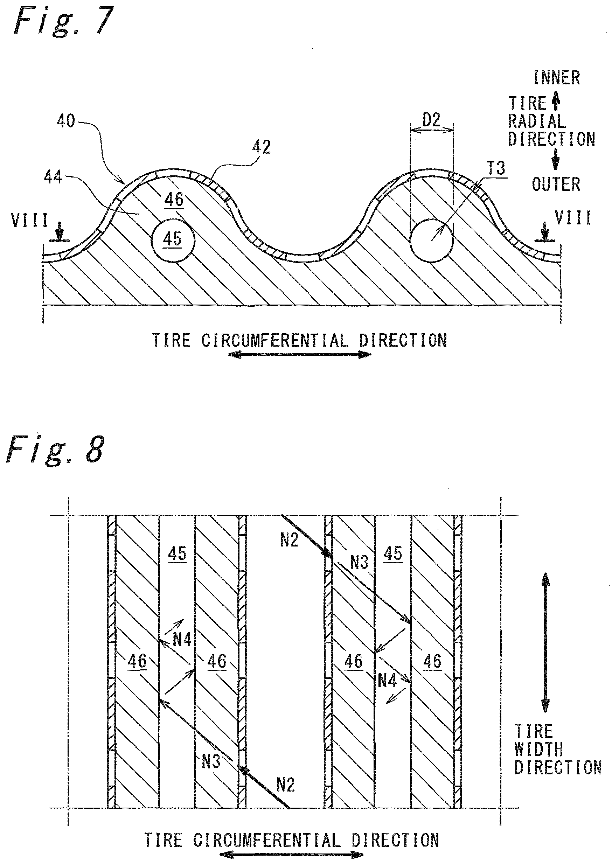

FIG. 7 is a cross-sectional view along the tire circumferential direction showing a sound suppressor 40 according to another modification. As shown in FIG. 7, the sound suppressor 40 further differs from the sound suppressor 30 in that cylindrical hollow portions 45 penetrating protrusions 44 in the tire width direction are formed.

FIG. 8 is a cross-sectional view in the hollow portions 45 of the protrusions 44 along the line VIII-VIII of FIG. 7. As shown in FIG. 8, the cavity resonance N2 is absorbed by a solid portion 46 between the surface of the protrusion 44 and the hollow portion 45, and is reduced to a cavity resonance N3. Furthermore, the cavity resonance N3, which is attenuated by diffused reflection on an inner wall surface in the hollow portion 45, is further reduced to a cavity resonance N4.

Although illustration is omitted, the tire sound N1 caused by the vibration of the tread portion 11 is also further reduced in the protrusion 44 by attenuation in the hollow portion 45 in addition to sound absorption in the solid portion 46. The tire sound N1 is then transmitted to the tire inner cavity 3.

Therefore, by combining the sound absorption by the solid portion 46 and the attenuation by the hollow portion 45, the cavity resonance N2 is more effectively reduced.

A hole diameter D2 of the hollow portion 45 is set equal to a thickness T3 of the porous part from the surface of the protrusion 44 to the hollow portion 45. This allows the cavity resonance N2 to be further effectively reduced by combining the sound absorption in the solid portion 46 and the attenuation in the hollow portion 45 in well balance.

Note that the present invention is not limited to the configurations described in the above embodiment, and various modifications are possible within the scope of the appended claims.

## Claims

1. A pneumatic tire (10) comprising:
a tread portion (11); and
a sound suppressor (20, 30) extending in a tire circumferential direction over an entire circumference of a tire inner peripheral surface of the tread portion (11),
wherein the sound suppressor (20, 30) includes:
a porous part (21, 31) attached to the tire inner peripheral surface of the tread portion (11); and
a thin film part (22, 32) laminated inside in a tire radial direction of the porous part (21, 31) and facing a tire inner cavity (3), and
the thin film part (22, 32) is a non-porous material,
the tire being **characterised in that** the thin film part is formed with a plurality of through holes (22a, 32a).

2. The pneumatic tire (10) according to claim 1, wherein
the thin film part (22, 32) is formed of a thermoplastic polymer, a thermoplastic resin, a thermoplastic elastomer, or a rubber.

3. The pneumatic tire (10) according to claim 1 or 2, wherein
in the sound suppressor (20, 30), a natural frequency of the thin film part (22, 32) is between 200 Hz and 250 Hz inclusive in a state where the thin film part (22, 32) being laminated on the porous part (21, 31).

4. The pneumatic tire (10) according to any one of claims 1 to 3, wherein
a thickness (T1) of the thin film part (22, 32) is between 0.1 mm and 2.0 mm inclusive.

5. The pneumatic tire (10) according to any one of claims 1 to 4, wherein
a thickness (T1) of the thin film part (22, 32) is between 2% and 10% inclusive of a thickness (T2) of the porous part (21, 21).

6. The pneumatic tire (10) according to any one of claims 1 to 5, wherein
a hole diameter (D1) of each of the through holes (22a, 32a) is between 1 mm and 10 mm inclusive.

7. The pneumatic tire (10) according to any one of claims 1 to 6, wherein
an interval (P1) between the plurality of through holes (22a, 32a) is between 5 mm and 50 mm inclusive.

8. The pneumatic tire (10) according to any one of claims 1 to 7, wherein
the porous part (31) includes a plurality of protrusions (34) protruding inside in the tire radial direction and extending in a tire width direction, the protrusions (34) being formed at intervals in the tire circumferential direction.

## Patentansprüche

1. Luftreifen (10) mit:
einem Laufflächenabschnitt (11) und
einem Schalldämpfer (20, 30), der sich in einer Reifenumfangsrichtung über einen gesamten Umfang einer Reifeninnenumfangsoberfläche des Laufflächenbereichs (11) erstreckt,
wobei der Schalldämpfer (20, 30) umfasst:
einen porösen Teil (21, 31), der an der inneren Umfangsfläche des Laufflächenabschnitts (11) angebracht ist, und
einem Dünnfilmteil (22, 32), der in Reifenradialrichtung des porösen Teils (21, 31) laminiert ist und einem Reifeninnenhohlraum (3) gegenüberliegt, und
der Dünnfilmteil (22, 32) ein nicht-poröses Material ist,
wobei der Reifen dadurch charakterisiert ist, dass der Dünnfilmteil mit mehreren Durchgangslöchern (22a, 32a) ausgebildet ist.

2. Luftreifen (10) nach Anspruch 1, wobei
der Dünnfilmteil (22, 32) aus einem thermoplastischen Polymer, einem thermoplastischen Harz, einem thermoplastischen Elastomer oder einem Gummi gebildet ist.

3. Luftreifen (10) nach Anspruch 1 oder 2, wobei in dem Schalldämpfer (20, 30) in einem Zustand, bei dem der Dünnfilmteil (22, 32) auf den porösen Teil (21, 31) laminiert ist, eine natürliche Frequenz des Dünnfilmteils (22, 32) zwischen 200 Hz und 250 Hz einschließlich liegt.

4. Luftreifen (10) nach einem der Ansprüche 1 bis 3, wobei
eine Dicke (T1) des Dünnfilmteils (22, 32) zwischen 0,1 mm und 2,0 mm einschließlich liegt.

5. Luftreifen (10) nach einem der Ansprüche 1 bis 4, wobei
eine Dicke (T1) des Dünnfilmteils (22, 32) zwischen 2% und 10% einschließlich einer Dicke (T2) des porösen Teils (21, 31) liegt.

6. Luftreifen (10) nach einem der Ansprüche 1 bis 5, wobei
ein Lochdurchmesser (D1) eines jeden der Durchgangslöcher (22a, 32a) zwischen 1 mm und 10 mm einschließlich liegt.

7. Luftreifen (10) nach einem der Ansprüche 1 bis 6, wobei
ein Intervall (P1) zwischen den mehreren Durchgangslöchern (22a, 32a) zwischen 5 mm und 50 mm einschließlich liegt.

8. Luftreifen (10) nach einem der Ansprüche 1 bis 7, wobei
der poröse Teil (31) mehrere Vorsprünge (34) aufweist, die nach innen in der Radialrichtung vorspringen und sich in einer Reifenbreitenrichtung erstrecken, wobei die Vorsprünge (34) mit Intervallen in der Reifenumfangsrichtung gebildet sind.

## Revendications

1. Pneumatique (10) comprenant :
une portion de bande de roulement (11) ; et
un atténuateur de bruit (20, 30) s'étendant dans une direction circonférentielle de pneumatique au-dessus de toute une circonférence d'une surface périphérique intérieure de pneumatique de la portion de bande de roulement (11),
dans lequel l'atténuateur de bruit (20, 30) comporte :
une partie poreuse (21, 31) fixée à la surface périphérique intérieure de pneumatique de la portion de bande de roulement (11) ; et
une partie de film mince (22, 32) laminée à l'intérieur dans une direction radiale de pneumatique de la partie poreuse (21, 31) et tournée vers une cavité interne de pneumatique (3), et
la partie de film mince (22, 32) est un matériau non poreux,
le pneumatique étant **caractérisé en ce que** la partie de film mince est formée avec une pluralité de trous débouchants (22a, 32a).

2. Pneumatique (10) selon la revendication 1, dans lequel
la partie de film mince (22, 32) est formée d'un polymère thermoplastique, d'une résine thermoplastique, d'un élastomère thermoplastique, ou d'un caoutchouc.

3. Pneumatique (10) selon la revendication 1 ou 2, dans lequel
dans l'atténuateur de bruit (20, 30), une fréquence naturelle de la partie de film mince (22, 32) est comprise entre 200 Hz et 250 Hz inclus dans un état où la partie de film mince (22, 32) est en train d'être laminée sur la partie poreuse (21, 31).

4. Pneumatique (10) selon l'une quelconque des revendications 1 à 3, dans lequel
une épaisseur (T1) de la partie de film mince (22, 32) est comprise entre 0,1 mm et 2,0 mm inclus.

5. Pneumatique (10) selon l'une quelconque des revendications 1 à 4, dans lequel
une épaisseur (T1) de la partie de film mince (22, 32) est comprise entre 2 % et 10 % inclus d'une épaisseur (T2) de la partie poreuse (21, 21).

6. Pneumatique (10) selon l'une quelconque des revendications 1 à 5, dans lequel
un diamètre de trou (D1) de chacun des trous débouchants (22a, 32a) est compris entre 1 mm et 10 mm inclus.

7. Pneumatique (10) selon l'une quelconque des revendications 1 à 6, dans lequel
un intervalle (P1) entre la pluralité de trous débouchants (22a, 32a) est compris entre 5 mm et 50 mm inclus.

8. Pneumatique (10) selon l'une quelconque des revendications 1 à 7, dans lequel
la partie poreuse (31) comporte une pluralité de parties saillantes (34) faisant saillie à l'intérieur dans la direction radiale de pneumatique et s'étendant dans une direction en largeur de pneumatique, les parties saillantes (34) étant formées par intervalles dans la direction circonférentielle de pneumatique.
